# EUROPÄISCHE PATENTSCHRIFT

(11) **EP 2 175 996 B1**
(45) Veröffentlichungstag und Bekanntmachung des Hinweises auf die Patenterteilung: **14.10.2015**
(21) Anmeldenummer: 08786752.9
(22) Anmeldetag: 01.08.2008
(51) Int. Cl.: B01L 3/00, G01N 1/36, A61B 10/02, G01N 1/30

(54) **VERFAHREN FÜR DAS FIXIEREN/STABILISIEREN EINER PROBE**
METHOD FOR FIXING/STABILISING A SAMPLE
PROCÉDÉ POUR FIXER/STABILISER UN ÉCHANTILLON

(30) Priorität: 02.08.2007 EP 07113714
(43) Veröffentlichungstag der Anmeldung: 21.04.2010
(73) Patentinhaber: Preanalytix GmbH, 8634 Hombrechtikon (CH)
(72) Erfinder: GRÖLZ, Daniel, 42697 Solingen (DE); LENZ, Christian, 40235 Düsseldorf (DE); HOLLÄNDER, Vera, 59423 Unna (DE); ROTHMANN, Thomas, 40764 Langenfeld (DE)
(74) Vertreter: Gille Hrabal
(86) Internationale Anmeldenummer: PCT/EP2008/060132
(87) Internationale Veröffentlichungsnummer: WO 2009/016255

(56) Entgegenhaltungen:
- EP-A- 0 311 035
- EP-A- 1 595 502
- EP-A- 1 804 045
- WO-A-2006/078922
- WO-A2-2009/013548
- DE-A1- 3 501 061
- DE-B1- 2 903 760
- US-A- 5 104 640
- US-A1- 2003 211 452
- TAKAGI HIRONORI ET AL: "Microdissected region-specific gene expression analysis with methacarn-fixed, paraffin-embedded tissues by real-time RT-PCR" JOURNAL OF HISTOCHEMISTRY AND CYTOCHEMISTRY, HISTOCHEMICAL SOCIETY, NEW YORK, NY, US, Bd. 52, Nr. 7, 1. Juli 2004 (2004-07-01), Seiten 903-913, XP002439989 ISSN: 0022-1554
- LI P ET AL: "Identification of cell types in the developing goat mammary gland" THE HISTOCHEMICAL JOURNAL, KLUWER ACADEMIC PUBLISHERS, DO, Bd. 31, Nr. 6, 1. Juni 1999 (1999-06-01), Seiten 379-393, XP002439987 ISSN: 1573-6865
- TYRRELL L ET AL: "DETECTION OF SPECIFIC MRNAS IN ROUTINELY PROCESSED DERMATOPATHOLOGY SPECIMENS" AMERICAN JOURNAL OF DERMATOPATHOLOGY, RAVEN PRESS, NEW YORK, NY, US, Bd. 17, Nr. 5, 1. Oktober 1995 (1995-10-01), Seiten 476-483, XP009073663 ISSN: 0193-1091
- SMITH M A ET AL: "Iron accumulation in Alzheimer disease is a source of redox-generated free radicals" PROCEEDINGS OF THE NATIONAL ACADEMY OF SCIENCES OF USA, NATIONAL ACADEMY OF SCIENCE, WASHINGTON, DC.; US, Bd. 94, Nr. 18, 2. September 1997 (1997-09-02), Seiten 9866-9868, XP002439988 ISSN: 0027-8424
- WATAYA TAKAFUMI ET AL: "High molecular weight neurofilament proteins are physiological substrates of adduction by the lipid peroxidation product hydroxynonenal" JOURNAL OF BIOLOGICAL CHEMISTRY, AMERICAN SOCIETY OF BIOLOCHEMICAL BIOLOGISTS, BIRMINGHAM,; US, Bd. 277, Nr. 7, 15. Februar 2002 (2002-02-15), Seiten 4644-4648, XP002439986 ISSN: 0021-9258

## Beschreibung

Die Erfindung betrifft ein Verfahren für die Fixierung und / oder Stabilisierung einer Probe. Es werden Biomoleküle stabilisiert und/ oder Gewebe fixiert, also haltbar gemacht. Zu stabilisierende Biomoleküle sind insbesondere DNA, RNA sowie Proteine.

Aus den Druckschriften WO 03/040697 sowie DE 40 19 182 A1 ist bekannt, Gewebeproben zu fixieren, eine fixierte Probe zu entwässern und in Paraffin einzubetten. Die in Paraffin eingebettete Probe wird in dünne Scheiben geschnitten und unter dem Mikroskop untersucht. Gemäß der Druckschrift DE 40 19 182 A1 wird die Durchtränkung von Proben mit Hilfe von Ultraschall unterstützt. Der Druckschrift DE 198 20 466 A1 ist entnehmen, eine biologische Probe mit Hilfe von Ultraschall aufzuschließen.

Um eine biologische Probe stabilisieren zu können, ist es besonders wichtig, dass eine Stabilisierungslösung bzw. Stabilisierungsflüssigkeit die Probe, die die Biomoleküle enthält, schnell genug durchdringt. Insbesondere wenn es sich bei der biologischen Probe um ein Gewebe handelt, ist es von Vorteil, dass das Gewebe von einer Fixierlösung bzw. Fixierflüssigkeit schnell genug durchdrungen wird, um das Gewebe erfolgreich zu fixieren.

Nach dem Stand der Technik gibt ein Hersteller einer Stabilisierungslösung vor, welche Randbedingungen bei der Stabilisierung zu beachten sind. So gibt ein Hersteller einer Stabilisierungslösung beispielsweise an, welche Dimensionen eine Probe nicht überschreiten darf, damit bestimmte Biomoleküle zum Beispiel RNA an jeder Stelle der Probe gleichermaßen stabilisiert werden. Eine solche Angabe besteht beispielsweise darin, dass eine bestimmte Dicke vorgegeben wird, die eine Probe nicht überschreiten darf, um die gewünschte Stabilisierung zu erreichen. In einigen Fällen werden auch weitere geometrische Angaben hinzugefügt. Beispielsweise ein Laborant muss dann beispielsweise mithilfe eines Skalpells eine Probe in die gewünschte Größe bringen, bevor die Probe in eine Stabilisierungslösung gegeben wird. Zusätzlich geben Hersteller in vielen Fällen ergänzend an, welches Verhältnis zwischen Stabilisierungslösung und Probe einzuhalten ist, um eine gewünschte Stabilisierung zu erreichen.

Soll Gewebe fixiert werden, so werden häufig keine zu beachtenden Randbedingungen für die Fixierung vom Hersteller angegeben und zwar insbesondere dann, wenn das Gewebe für histologische Untersuchungen fixiert werden soll. Für histologische Untersuchungen wird in der Regel Formalin als Fixierlösung eingesetzt. Das gewünschte Gewebe wird dann in Formalin eingelegt und so fixiert.

Auch wenn bei der Fixierung mit Fixierlösungen, welche Formaldehyd enthalten wie zum Beispiel Formalin in der Regel keine Vorgaben gemacht werden, so macht sich eine zu große Größe einer Probe im Fall der Stabilisierung von Gewebe doch nachteilhaft bemerkbar. Auch bei Formaldehyd enthaltenden Fixierlösungen ist es daher ratsam, bestimmte Größen bzw. Dimensionen nicht zu überschreiten, um ein Gewebe erfolgreich zu fixieren.

Die Druckschrift US 7,147,826 B2 offenbart das Vorsehen eines verschließbaren, durchströmbaren Korbes, der in ein weiteres Gefäß mit einer darin befindlichen Stabilisierungslösung hinein gestellt werden soll. Von allen Seiten kann Flüssigkeit in den durchströmbaren Korb eindringen. Befindet sich eine zu stabilisierende biologische Probe im Korb, so soll so sichergestellt werden, dass die Stabilisierungslösung von allen Seiten an die Probe gelangen kann.

Die Druckschrift US 2003/0087423 A1 offenbart ebenfalls das Vorsehen eines durchströmbaren Korbs für eine biologische Probe. Allerdings wird hier der Korb an einem Deckel des Gefäßes befestigt, um so die Handhabung zu erleichtern. Wiederum soll eine im Korb befindliche Probe zuverlässig und vollständig von allen Seiten von einer Lösung erreicht werden können.

Der Druckschrift EP 1 262 758 A1 ist ein weiterer durchströmbarer Behälter für die Präparation von Gewebe zu entnehmen.

Aus dem Stand der Technik sind unter dem Markennamen "Histosette" aus Kunststoff bestehende Kassetten mit aufklappbarem Deckel bekannt, die für die Aufnahme von Gewebeproben für Prozessierung oder Entwässerung des Gewebes vorgesehen sind. Die Fläche des Bodens bzw. Deckels einer Histosette beträgt wenigstens 3 cm * 2,5 cm. Eine solche Kassette ist wenigstens 0,5 cm hoch bzw. dick. Boden und Deckel sind siebförmig ausgestaltet oder mit einer Vielzahl von Schlitzen versehen, damit Flüssigkeit in die Kassette beispielsweise während einer Entwässerung eines Gewebes gelangen kann.

Werden Histosetten eingesetzt, um Gewebe zu entwässern, um so beispielsweise im Anschluss daran histologische Untersuchungen durchführen zu können, so wird bereits fixiertes Gewebe, welches zuvor beispielsweise in Formalin eingelegt war, zunächst auf die gewünschte passende Größe für die Histosette zurechtgeschnitten. Anschließend wird das Gewebe in die Histosette hineingelegt und die Histosette verschlossen. Nun wird die Histosette zusammen mit dem darin befindlichen Gewebe in einen Automaten gegeben, in dem eine Entwässerung automatisiert durchgeführt wird.

Die beispielsweise in dem genannten Automaten vorgesehenen Entwässerungsschritte können umfassen, dass das bereits fixierte Gewebe noch einmal mit einer Fixierlösung behandelt wird. Das Gewebe wird dadurch allerdings nicht im Sinne der vorliegenden Erfindung fixiert, da das Gewebe zuvor bereits fixiert worden ist. Danach wird die Histosette mit dem darin befindlichen Gewebe nacheinander in verschiedene Alkoholbäder mit zunehmend höherer Alkoholkonzentration getaucht. Durch Alkohol wird dem Gewebe das darin befindliche Wasser entzogen. Damit die Entwässerung des Gewebes schonend verläuft, wird die Alkoholkonzentration nur langsam von Bad zu Bad gesteigert.

Anschließend wird die Histosette mit dem darin befindlichen Gewebe in ein Intermediärmedium wie zum Beispiel Xylol getaucht. Das Intermediärmedium verdrängt den im Gewebe befindlichen Alkohol. Im Unterschied zum Alkohol ist das Intermediärmedium mit Paraffin mischbar, was die nachfolgende Paraffinbehandlung vorbereitet.

Im Anschluss daran wird die Histosette mit dem darin befindlichen Gewebe nämlich in heißes und damit flüssiges Paraffin getaucht. Paraffin dringt dann in das Gewebe ein. Ist das Paraffin in gewünschter Weise in das Gewebe eingedrungen, so wird die Histosette aus dem Automaten herausgeholt. Das dann bereits leicht ausgehärtete Paraffin mit dem darin befindlichen Gewebestück wird anschließend in ein Förmchen, also einen nach oben hin offenen, kleinen Behälter überführt und mit heißem, flüssigem Paraffin überschichtet, um so nach dem Erkalten des Paraffins einen Paraffinblock zu erhalten, in dem sich das Gewebe befindet. Erkaltet dieses Paraffin, so liegt eine in Paraffin eingebettete, entwässerte Probe vor. Zur Durchführung von histologischen Untersuchungen werden mikrometerdünne Gewebsschnitte hergestellt. Diese Gewebeschnitte können auf Objektträger aufgezogen, entparaffiniert, gefärbt und mit Hilfe eines Mikroskops beurteilt werden. Ein Nachteil der Fixierung mit formaldehydhaltigen Fixierlösungen besteht darin, dass Biomoleküle zum Teil irreversibel kreuzvernetzt und damit zerstört werden. Die Isolierung von Biomolekülen für analytische Untersuchungen wird dadurch erschwert oder unmöglich gemacht.

Eine durchströmbare Kassette mit aufklappbarem Deckel für die Aufnahme von Gewebeproben ist aus der Druckschrift US 2007/0140920 A1 bekannt. Eine Probe wird in die Kassette gebracht und die Kassette verschlossen. Die Probe wird in der Kassette entwässert, gesäubert und mit Wachs infiltriert. Die Probe vor der Entwässerung zu fixieren bzw. zu stabilisieren, während sich diese in der Kassette befindet, ist der US 2007/0140920 A1 nicht zu entnehmen.

Durchströmbare Kassetten für die Aufnahme von biologischen Proben, sind ferner den Druckschriften US 2005/0147538 A1 sowie WO 2005/0371 82 A2 zu entnehmen. Aus beiden Druckschriften geht hervor, dass eine Probe erst zu fixieren ist. Erst im Anschluss an die Fixierung wird Probenmaterial in eine Kassette gebracht und weiter in gewünschter Weise behandelt.

Aus der Druckschrift US 2006/0178598 A1 geht ein Werkzeug mit vorstehenden, nadelförmigen Teilen hervor, die mit Haken versehen sind. Die vorstehenden, nadelförmigen Teile sollen in eine Probe hineingestochen werden, um anschließend von den vorstehenden, nadelförmigen erfasstes Probenmaterial aus der übrigen Probe herauszureißen. Dieses Werkzeug umfasst keinen Behälter im Sinne der Erfindung, da die nadelförmigen Teile keine Behälterwände sind. Insbesondere gibt es keine siebförmigen, gitterförmigen oder mit Schlitzen versehene Wände.

Weitere Verfahren und Werkzeuge des Standes der Technik sind aus den Schriften DE 2 903 760 B1 und WO 2009/013548 bekannt.

Aufgabe der Erfindung ist es, Biomoleküle sowie Gewebe verbessert zu stabilisieren bzw. zu fixieren und in einer Ausgestaltung vereinfacht untersuchen zu können.

Die Aufgabe der Erfindung wird mit einem Verfahren mit den Merkmalen des Anspruchs 1 gelöst. Ein Gegenstand zur Durchführung des Verfahrens umfasst die Merkmale des Nebenanspruchs. Vorteilhafte Ausgestaltungen ergeben sich aus den Unteransprüchen.

Gemäß der Erfindung weist ein durchströmbarer Behälter, der die Dimension und zwar insbesondere die Dicke eines zu fixierenden Gewebes geeignet beschränkt, an einer Seite und zwar vorzugsweise an einer schmalen Seite eine scharfkantige Öffnung auf. Die scharfkantige Öffnung ist dafür vorgesehen, in eine zu fixierende und/ oder zu stabilisierende Probe gestoßen zu werden. Durch eine Drehbewegung kann der dann im durchströmbaren Behälter befindliche Teil der Probe abgetrennt und herausgezogen werden. Der durchströmbare Behälter ist dann seitlich siebartig ausgestaltet. Es befindet sich dann das Gewebe in einer für die Fixierung und / oder Stabilisierung besonders geeigneten Dimensionierung in dem durchströmbaren Behälter.

Eine scharfkantige Öffnung im Sinne der Erfindung wird insbesondere durch eine Verjüngung der Wandstärke in Richtung Öffnung verwirklicht, so dass schließlich die entsprechende Wand mit einer Kante endet, die den Rand der Öffnung bildet bzw. Teil des Randes ist.

Der durchströmbare Behälter kann im Inneren mit Haken versehen sein, die so gerichtet sind, dass die Haken einem Herausrutschen der Probe aus dem Behälter entgegenwirken. Dies unterstützt zwar die Abtrennung des im Behälter befindlichen Teils der Probe von dem übrigen Teil. Allerdings kann dies eine spätere Entnahme der Probe erschweren. Zu bevorzugen ist daher eine Ausführungsform des durchströmbaren Behälters, der im Unterschied zu dem aus der Druckschrift US 2006/01 78598 A1 bekannten Stand der Technik nicht mit den hieraus bekannten Haken versehen ist.

Eine Probe wird in einer Ausführungsform in einen durchströmbaren Behälter mit einer maximalen Bauhöhe von 10 mm, vorzugsweise von 5 mm gegeben. Der mit der Probe befüllte Behälter wird in Mittel für das Fixieren und/ oder Stabilisieren eingetaucht. Als Folge wird die Probe fixiert und/ oder stabilisiert.

Eines der dringensten Probleme bei der Fixierung von Gewebeproben besteht im Mangel an Standardisierung. Es gibt keine allgemein akzeptierten und umgesetzten Vorschriften darüber, welches Volumen an Fixiermittel, z.B. Formalin, pro Volumen Gewebe eingesetzt werden muss, obwohl bekannt ist, dass zu wenig Fixiermittel eine Schädigung der Gewebestrukturen im Inneren der Probe durch Autolyse zur Folge haben kann. Außerdem kann sich in nicht fixierten Bereichen das Expressionsmuster der Zellen verschieben durch Geninduktion oder Abbau von mRNA.

Ein Behälter im Sinne des Hauptanspruchs weist eine maximale Bauhöhe von 10 mm bzw. 5 mm auf, wenn zwei Innenwände oder aber entsprechend Boden und Deckel des Behälters nicht mehr als 10 mm bzw. 5 mm auseinander liegen. Befindet sich die Probe in diesem Behälter, so wird dadurch sichergestellt, dass flüssige Fixiermittel und/ oder Stabilisierungsmittel die im Behälter befindliche Probe schnell zu durchdringen vermögen und zwar in besonders guter Weise, wenn die Bauhöhe nicht mehr als 5 mm beträgt. Da der Behälter durchströmt werden kann, kann flüssiges Fixiermittel und/ oder Stabilisierungsmittel, die in Form von ein oder mehreren Lösungen vorliegen können, in das Innere des Behälters gelangen und in die Probe eindringen. Erst durch das Eintauchen bzw. als Folge davon wird die im durchströmbaren Behälter befindliche Probe fixiert bzw. stabilisiert. Dies umfasst, dass die Probe zuvor noch nicht fixiert sowie stabilisiert war.

Vorzugsweise sind die beiden Wände bzw. Boden und Deckel des durchströmbaren Behälters siebförmig ausgestaltet oder mit Schlitzen und dergleichen versehen, die nicht mehr als 10 mm, vorzugsweise nicht mehr 5 mm auseinanderliegen. Bei dieser Ausgestaltung wird weiter verbessert sichergestellt, dass die im durchströmbaren Behälter befindliche Probe ordnungsgemäß fixiert und/ oder stabilisiert wird.

In einer vorteilhaften Ausgestaltung der Erfindung erfolgt die Fixierung und/ oder Stabilisierung der in dem durchströmbaren Behälter befindlichen Probe in einem Gefäß mit genau definierten Ausmaßen, gefüllt mit einem genau definierten Volumen an Fixier- und/oder Stabilisierungslösung. Die Größe des durchströmbaren Behälters definiert dabei die maximale Größe der Gewebeprobe und das Gefäß das Volumen an Fixier- und/oder Stabilsierungsreagenz. Dies hat den erheblichen Vorteil, dass durch die gewählte Anordnung ein genau definiertes Verhältnis von Fixier- und/oder Stabilsierungsreagenz zu Gewebeprobe erzielt wird. Ein in seiner Größe genau definierter durchströmbarer Behälter in Kombination mit einem in seiner Größe genau definierten Gefäß führt zu einer Standardisierung der Gewebefixierung. Ein optimal gewähltes Verhältnis aus Fixier- und/oder Stabilsierungsreagenz zu Gewebeprobe vermeidet Unterfixierung und sorgt für eine Standardisierung der Fixierung und damit auch eine bessere Vergleichbarkeit zwischen verschiedenen Proben. Zur Ausführung dieser Ausgestaltung der Erfindung wird also ein Set bereitgestellt bzw. vorgegeben, welches wenigstens ein Gefäß mit vorgegeben Ausmaßen nebst dem durchströmbaren Behälter umfasst. Vorzugsweise umfasst das Set zusätzlich eine vorgegebene Fixierlösung, um so eine Probe in standardisierter Weise fixieren bzw. stabilisieren zu können.

Das Gefäß mit dem durchströmbaren Behälter kann neben der Fixierung auch als Lagerungsgefäß oder zum Transport der Probe dienen.

In einer weiteren Ausgestaltung ist der durchströmbare Behälter ein Bestandteil des Gefäßes. Zum Beispiel kann der durchströmbare Behälter durch einen Steg mit dem Deckel des Aufnahmegefäßes, in dem sich die Fixier-und/oder Stabilisierungslösung befindet, verbunden sein. Der durchströmbare Behälter bildet auf diese Weise einen integralen Bestandteil des Gefäßes. Indem der durchströmbare Behälter mit dem Deckel verbunden ist, kann der Behälter für Be- und Entladen aus dem Gefäß leicht entnommen werden. Es ist nicht notwendig, mit Hilfsmitteln wie einer Pinzette oder ähnlichem nach dem durchstömbaren Behälter zu greifen. Die Kontaminationsgefahr bzw. der Kontakt mit potenziell giftigen Fixierreagenzien wird auf diese Weise minimiert. Sofern die Gewebeprobe durch mehrere Lösungen passagiert werden muss, kann dies vereinfacht durchgeführt werden. Alle benötigten Lösungen werden in Gefäße mit gleicher Bauart bzw. gleichen Dimensionen befüllt. Ein Deckel, der auf diese Gefäße passt, enthält über einen Steg den durchströmbaren Behälter. Nach der Beladung mit der Gewebeprobe wird der Deckel nacheinander auf die verschiedenen Gefäße aufgesetzt, ohne das für den Transfer die Probe aus dem durchströmbaren Behälter entnommen werden muss.

In einer weiteren Ausführung ist der durchströmbare Behälter nicht ein integraler Bestandteil z.B. des Deckels des Gefäßes, kann aber durch eine Halterung am Deckel befestigt werden. Diese Halterung kann direkt unterhalb des Deckels oder an einem Steg, welcher mit dem Deckel verbunden ist, befestigt sein. Vorteil dieser Anordnung ist es, dass der durchströmbare Behälter trocken beladen werden kann, da er vor seiner Beladung mit der Gewebeprobe nicht mit potenziell toxischen Fixierreagenzien im Gefäß in Berührung gekommen ist.

In einer weiteren Ausgestaltung kann der durchstömbare Behälter, der über einen Steg mit dem Deckel eines Gefäßes verbunden ist, vom Deckel durch eine einfache mechanische Manipulation abgetrennt werden. Z.B. kann der Steg in der Nähe des durchströmbaren Behälters eine Sollbruchstelle enthalten. In einer weiteren Ausgestaltung läßt sich der durchströmbare Behälter durch eine Abwurfvorrichtung, welche sich am Deckel des Aufnahmegefäßes befindet abtrennen. Z.B. kann der durchströmbare Behälter in einer Ausführungsform durch mechanischen Druck abgeworfen werden, wobei der Druck durch einen Stempel, der sich im Inneren des Steges befindet, ausgeübt wird. Der Stempel sitzt auf einer Seite auf dem durchströmbaren Behälter auf und ragt auf der anderen Seite aus dem Deckel des Gefäßes heraus. Durch Druck von außen auf den Stempel wird der durchströmbare Behälter abgeworfen. Vorteil einer solchen Vorrichtung wäre, dass der durchströmbare Behälter für den Transfer in z.B. einen Entwässerungsautomaten oder eine andere Lösung nicht angefasst oder manipuliert werden muss.

In einer Ausgestaltung der Erfindung sind die Dimensionen des durchströmbaren Behälters so gewählt, dass der durchströmbare Behälter in einen Entwässerungsautomaten eingesetzt werden kann, um die im durchströmbaren Behälter befindliche Probe im Anschluss an die Fixierung bzw. Stabilisierung zu entwässern. Die Probe muss dann nicht von einem durchströmbaren Behälter in einen weiteren Behälter umgefüllt werden, wenn die Probe im Anschluss an eine Fixierung bzw. Stabilisierung entwässert werden soll. Ein Arbeitsschritt wird so vermieden. Es kann aber auch eine Fixierung und/ oder Stabilisierung im Entwässerungsautomaten durchgeführt werden. Die noch nicht fixierte bzw. stabilisierte Probe wird durch den Entwässerungsautomaten zuerst in eine Fixierlösung und/ oder Stabilisierungslösung oder vergleichbare Mittel getaucht. Dies ist vor allem dann wirtschaftlich sinnvoll, wenn die Probe hinreichend dünn ist und daher eine Fixierung bzw. Stabilisierung relativ schnell erreicht werden kann.

Als Fixiermittel kann Formalin verwendet werden, falls lediglich histologische Untersuchungen durchgeführt werden sollen. Sollen hingegen Biomoleküle für nachfolgende Untersuchungen stabilisiert, also haltbar gemacht werden, so ist eine geeignete Stabilisierungslösung bzw. Stabilisierungsmittel auszuwählen, da dies mit Formalin nicht möglich ist. Für die Stabilisierung der RNA einer Probe kann RNAlater® der US-Fa. Ambion als Stabilisierungslösung eingesetzt werden. Ein anderes Beispiel für die gleichzeitige Stabilisierung von DNA, RNA und Proteinen ist die Stabilisierungslösung Allprotect™ Tissue Reagenz der deutschen Fa. Qiagen GmbH. Ein Beispiel für die Stabilisierung der Morphologie für histologische Untersuchungen als auch der Biomoleküle DNA, RNA und Proteine in Gewebeproben sind die kommerziell erhältlichen PAXgene® Tissue Stabilisier- und Fixierreagenzien. Alle genannten Beispiele sind also Stabilisier- und Fixiermittel im Sinne der vorliegenden Lehre.

Bevorzugt wird als Mittel für das Fixieren und Stabilisieren einer Probe eine Polyol-haltige Zusammensetzung eingesetzt. Denn mit einer solchen Zusammensetzung gelingt das Fixieren sowie Stabilisieren besonders gut und einfach, wie der Druckschrift EP 1 804 045 Al zu entnehmen ist. Die Offenbarungsgehalte dieser Druckschriften, der weitere vorteilhafte Ausgestaltungen eines solchen Mittels zu entnehmen sind, beziehen wir hiermit als vorteilhafte Ausgestaltung des beanspruchten Verfahrens mit ein.

Um eine biologische Probe zugleich zu stabilisieren und zu fixieren, wird die Probe insbesondere in beanspruchter Weise mit einer Zusammensetzung in Kontakt gebracht, umfassend 1 bis zu 100 Gew.-% mindestens eines Polyols sowie 0 bis 99 Gew.-% mindestens eines Additivs, wobei die Gesamtmenge der beiden genannten Komponenten 100 Gew.-% beträgt.

Bei dem Polyol handelt es sich insbesondere um einen Diol, Triol, Tetraol, Pentaol, Hexaol, Heptaol, Octaol oder Nonaol, wobei Diol oder Triol besonders zu bevorzugen sind. Vorzugsweise weist der Polyol 2 bis 20 Kohlenstoffatome auf.

Der Polyol ist in einer vorteilhaften Ausgestaltung ausgewählt aus der Gruppe umfassend 1,2-Ethandiol, 1,2-Propandiol, 1,3-Propandiol, 1,2-Butandiol, 1,3-Butandiol, 1,4-Butandiol, 2,3-Butandiol, 1,2-Pentandiol, 1,3-Pentandiol, 1,4-Pentandiol, 1,5-Pentandiol, 2,3-Pentandiol, 2,4-Pentandiol, 1,2-Hexaudiol, 1,3-Hexandiol, 1,4-Hexandiol, 1,5-Hexandiol, 1,6-Hexandiol, 2,3-Hexandiol, 2,4-Hexandiol, 2,5-Hexandiol, 3,4-Hexandiol, 1,2,3-Propantriol, 1,2,3-Butantriol, 1,2,4-Butantriol, 1,2,3-Pentantriol, 1,2,4-Pentantriol, 1,2,5-Pentantriol, 2,3,4-Pentantriol, 1,2,3-Hexantriol, 1,2,4-Hexantriol, 1,2,5-Hexanttiol, 1,2,6-Hexantriol, 2,3,4-Hexantriol, 2,3,5-Hexantriol, 3-Methyl-1 ,3,5-Pentantriol, Trimethylolpropanol, Pentaerythritol, Diethylenglykol, Dipropylenglykol, Triethylenglykol, Tripropylenglykol, Polyethylenglykol und Polypropylenglykol.

Die Zusammensetzung umfasst besonders bevorzugt eine Mischung aus mindestens zwei Polyolen.

Das Additiv ist vorzugsweise ausgewählt aus der Gruppe umfassend Detergentien, Inhibitoren, welche den Abbau von Nukleinsäuren oder Proteinen hemmen, Viskositätsregulierer, Farbstoffe, Pufferverbindungen, Konservierungsstoffe, Komplexbildner, Reduktionsmittel, Substanzen, welche die Permeabilität von Zellen verbessern, chaotrope Substanzen, Fixative, weitere, von Polyolen verschiedene Lösungsmittel sowie Mischungen aus mindestens zwei dieser Additive.

In einer bevorzugten Ausgestaltung umfasst das Verfahren eine histologische Analyse der mit der Zusammensetzung in Kontakt gebrachten biologischen Probe und/oder Analyse von Biomolekülen in der oder aus der mit der Zusammensetzung in Kontakt gebrachten biologischen Probe.

Nach dem Stand der Technik wird eine Probe ganz oder teilweise beispielweise mit Hilfe von Formalin fixiert, wenn die Probe histologisch untersucht werden soll. Ein nicht fixierter Teil dieser Probe wird mit einem Stabilisierungsmittel behandelt, wenn ergänzend Biomoleküle stabilisiert werden sollen. Das erfindungsgemäße Verfahren ermöglicht demgegenüber eine Vereinfachung von nachfolgenden Arbeitsabläufen vor allem dann, wenn die im Behälter befindliche Probe mit einem Fixier- und Stabilisierungsmittel, wie beispielsweise den in PCT/EP/2008052371 (published as WO 2008/104564) beschriebenen, behandelt wird, das zugleich das Gewebe einer Probe fixiert sowie Biomoleküle dieser Probe stabilisiert. Daher wird in einer bevorzugten Ausgestaltung die Lösung bzw. Flüssigkeit so ausgewählt, dass Biomoleküle und Gewebe zugleich haltbar gemacht werden.

Gemäß der Druckschrift PCT/EP/2008052371 werden die Morphologie und Biomoleküle in einem biologischen Material fixiert und stabilisiert, wobei das Verfahren folgende Schritte umfasst:
i) Bereitstellen eines biologischen Materials, und
ii) Kontaktieren des biologischen Materials mit einer ersten nichtwässrigen Zusammensetzung, umfassend:
   (a1) 10 bis 90 Vol.-% Methanol und
   (a2) wenigstens einen zusätzlichen Zusatzstoff und
   (a3) gegebenenfalls eine Säure,
iii) Überführen des biologischen Materials in eine zweite Zusammensetzung (B), umfassend bis zu 99 Vol.-% Ethanol.

Als erste Zusammensetzung bei Schritt ii) ist eine nichtwässrige Zusammensetzung (A) zum Konservieren von biologischem Material besonders nützlich, wobei die nichtwässrige Zusammensetzung (A) folgendes umfasst:
(α1) 10 bis weniger als 80 Vol.-% Methanol und
(α2) wenigstens einen zusätzlichen Zusatzstoff und
(α3) eine Säure.

Die Komponente (α1) der Zusammensetzung (A) ist Methanol. In der Zusammensetzung (A) ist Methanol in einem Umfang von 10 bis weniger als 80 % enthalten, vorzugsweise ist Methanol zu etwa 70 Vol.-%, zu etwa 60 Vol.-% oder zu etwa 50 Vol.-% enthalten.

Der wenigstens eine Zusatzstoff (α2) der Zusammensetzungen (A) bzw. (a2) der ersten Zusammensetzung von Schritt (ii) des vorstehend beschriebenen Verfahrens kann ein zusätzliches Lösungsmittel sein, das von Methanol verschieden ist, oder ein Zusatzstoff, der ausgewählt ist aus der Gruppe umfassend Detergenzien und Inhibitoren, welche den Abbau von Nukleinsäuren oder Proteinen hemmen, DEPC, Alkylierungsmittel, Acetylierungsmittel, Halogenierungsmittel, Nucleotide, nucleotidanaloge Verbindungen, Aminosäuren, aminosäureanaloge Verbindungen, Viskositätsregulatoren, Farbstoffe, Puffersubstanzen, Konservierungsmittel, Komplexierungsmittel, Reduktionsmittel, Oxidierungsmittel, Stoffe, welche die Permeabilität von Zellen verbessern, chaotrope Stoffe, wie z. B. Guanidiniumisothiocyanat oder Guanidiniumhydrochlorid oder chaotrope Salze mit Anionen, sowie Gemische von wenigstens zwei bis sechs dieser Zusatzstoffe.

Bevorzugte zusätzliche Zusatzstoffe sind C2- bis C12-Polyole, Polyethylenglycol (PEG) und Diethylenglycolmonoethyletheracetat (DEGMEA) und Chloroform. Gemäß der vorliegenden Erfindung ist es bevorzugt, dass die zusätzliche Komponente der Zusammensetzung A nicht Chloroform ist. Das PEG weist vorzugsweise einen Schmelzpunkt unterhalb der Umgebungstemperatur auf.

Das von Methanol verschiedene Lösungsmittel kann ein organisches Lösungsmittel sein, das vorzugsweise ausgewählt ist aus der Gruppe umfassend monohydrische Alkohole (Monoole), C2-C12-Polyole, Ketone, Dimethylsulfoxid, aromatische Kohlenwasserstoffe, halogenierte Kohlenwasserstoffe, Ether, Carbonsäuren, Carbonsäureamide, Nitrile, Nitroalkane und Ester, wobei geeignete Lösungsmittel beispielsweise aus der Gruppe von Ethanol, 1-Propanol, 2-Propanol, 1,3-Butandiol, 1,4-Butandiol, Acetonitril, Aceton, Anisol, Benzonitril, 1-Methoxy-2-propanol, Chinolin, Cyclohexanon, Diacetin, Dichlormethan, Chloroform, Xylol, Diethylether, Dimethylether, Toluol, Dimethylketon, Diethylketon, Dimethyladipat, Dimethylcarbonat, Dimethylsulfit, Dioxan, Dimethylsulfoxid, Methylacetat, Ethylacetat, Benzoesäure, Methylbenzoat, Ethylbenzoat, Ethylbenzol, Formamid, Glycerintriacetat, Ethylacetoacetat, Methylacetoacetat, N,N-Diethylacetamid, N-Methyl-N-ethylacetamid, N,N-Dimethylacetamid, N,N-Dimethylformamid, N-Methyl-N-ethylformamid, N,N-Diethylformamid, N,N-Dimethylthioformamid, N,N-Diethylthioformamid, N-Methyl-N-ethylthioformamid, N,N-Dimethylacetamid, N-Methyl-N-ethylacetamid, N,N-Diethylacetamid, Nitroethan, Nitromethyltoluol und Triethylphosphat ausgewählt sein kann. Vorzugsweise umfassen die Zusammensetzung A bzw. die nichtwässrige Zusammensetzung bei Schritt ii) kein halogeniertes Kohlenhydrat, insbesondere kein chloriertes Kohlenhydrat, insbesondere Chloroform und/oder Trichlorethan.

Die Konzentration der Komponenten (α2) und (a2) können gemäß der Druckschrift PCT/EP/2008052371 etwa 50 % bis 1 % (Vol./Vol.) betragen, vorzugsweise etwa 20 %.

Die Komponente (α3) der Zusammensetzung (A) bzw. die optionale Komponente (a3) der ersten Zusammensetzung, die bei Schritt (ii) des in Druckschrift PCT/EP/2008052371 beschriebenen Verfahrens verwendet wird, ist eine organische oder anorganische Säure, vorzugsweise eine schwache Säure, am meisten bevorzugt Essigsäure oder Propionsäure.

Die Zusammensetzung (A) kann als die erste Zusammensetzung bei Schritt ii) des Verfahrens gemäß der vorliegenden Erfindung verwendet werden. Es wird jedoch ausdrücklich betont, dass die Zusammensetzung (A) auch bei einem Verfahren zum Behandeln oder Konservieren von biologischem Material ohne den "Überführungsschritt" iii) verwendet werden kann. Ferner kann die erste Zusammensetzung bei Schritt ii) des Verfahrens gemäß der vorliegenden Erfindung eine von der Zusammensetzung (A) verschiedene Zusammensetzung sein, sofern die erste Zusammensetzung bei Schritt ii) wie vorstehend definiert Methanol als den Hauptinhaltsstoff umfasst.

Gemäß der Druckschrift PCT/EP/2008052371 umfasst das Verfahren zum Behandeln des biologischen Materials einen "Überführungsschritt" iii), bei welchem das biologische Material in eine zweite Zusammensetzung (B) überführt wird, welche bis zu 99 Vol.-% Ethanol umfasst. Der Überführungsschritt ist insbesondere zum Lagern des biologischen Materials geeignet.

Die besonderen Vorteile des beanspruchten Verfahrens werden bei Anwendung des in Druckschrift PCT/EP/2008052371 beschriebenen Verfahrens besonders deutlich. In einer Ausgestaltung wird die im durchströmbaren Behälter befindliche Probe in einem Gefäß mit der Zusammensetzung A fixiert und anschließend in ein Gefäß mit der Zusammensetzung B überführt. Für diesen Transfer von Zusammensetzung A nach Zusammensetzung B muss die Probe nicht von einem durchströmbaren Behälter in einen weiteren Behälter umgefüllt werden.

In einer weiteren Ausgestaltung ist der durchströmbare Behälter durch einen Steg mit dem Deckel des Aufnahmegefäßes, in dem sich die Zusammensetzung A befindet, verbunden. Sofern beide Gefäße mit der Zusammensetzung A und B über die gleichen Dimensionen verfügen, kann die im durchströmbaren Behälter befindliche Probe mit Hilfe des Deckels transferiert werden, wobei der Deckel das Gefäß mit Zusammensetzung B dicht verschließt. Dabei ist es nicht notwendig, dass der durchströmbare Behälter berührt oder geöffnet wird. In dieser Ausgestaltung kann das Gefäß mit der Zusammensetzung B zugleich als Lagerungsgefäß wie auch zum Transport der Probe in z.B. ein pathologisches Labor verwendet werden.

Vorteile und weitere Einzelheiten zu den verschiedenen Ausgestaltungen ergeben sich aus der internationalen Patentanmeldung mit dem Aktenzeichen PCT/EP/2008052371.

In einer weiteren Ausgestaltung umfasst das Verfahren eine histologische Analyse der mit der Zusammensetzung in Kontakt gebrachten biologischen Probe und/oder Analyse von Biomolekülen in der oder aus der mit der Zusammensetzung in Kontakt gebrachten biologischen Probe. Vorzugsweise ist die Analyse der Gewebehisotologie als auch die Analyse von Biomolekülen umfasst.

Vorzugsweise ist die Analyse von Proteinen als auch die Analyse von Nukleinsäuren umfasst.

In einer Ausgestaltung beinhaltet die Probe Organismen, isolierte Zellen, Organellen, Bakterien, Pilze oder Teile von Pilzen, Viren, Viroide, Prionen, Gewebe, Gewebefragmente, Gewebeschnitte, Körperflüssigkeiten, natürliche, gegebenenfalls isolierte Proteine, synthetische oder modifizierte Proteine, natürliche, gegebenenfalls isolierte Nukleinsäuren, synthetische oder modifizierte Nukleinsäuren, andere Biomoleküle wie z: B. Lipide, Kohlenhydrate, Stoffwechselprodukte und Metaboliten, Pflanzen oder Teile von Pflanzen, Fäkalien, Abstriche, Punktate, Lebensmittelproben, Umweltproben und/ oder forensische Proben.

Vorteile und weitere Einzelheiten zu weiteren verschiedenen Ausgestaltungen ergeben sich aus der EP 1 804 045 A1 bzw. der internationalen Patentanmeldung mit dem Aktenzeichen PCT/EP/2008052371.

Ein Mittel, das bei einer Probe sowohl die Morphologie des Gewebes fixiert als auch Biomoleküle stabilisiert, wird insbesondere dann gewählt, wenn zunächst die Histologie des Gewebes untersucht wird und im Anschluss daran in Abhängigkeit von histologischen Untersuchungsergebnissen darüber hinaus optional Biomoleküle isoliert und analysiert werden sollen.

In einer Ausgestaltung wird der durchströmbare Behälter ganz oder teilweise im Anschluss an einen Wasserentzug mit einem Paraffinblock verbunden, in den die zunächst fixierte und/ oder stabilisierte und im Anschluss daran entwässerte Probe in einer aus dem Stand der Technik bekannten Weise gebracht worden ist. Das Verbinden kann erreicht werden, indem der durchströmbare Behälter ganz oder teilweise auf ein Förmchen mit einer durchströmbaren Wand aufgesetzt wird, in dem die bereits mit Paraffin versehene Probe in Paraffin eingetaucht ist. Von oben durch die durchströmbare Wand hindurch wird noch weiter Paraffin hinzuzugeben. Durch die durchströmbare Wand hindurch gelangt Paraffin zusätzlich von dem Behälter oder Behälterteil in das Förmchen hinein und umschließt die durchströmbare Wand. Nach dem Erkalten des Paraffins ist der Behälter bzw. ein Teil des Behälters mit diesem Paraffinblock verbunden.

Der Behälter bzw. der mit dem Paraffinblock verbundene Teil davon bildet nun einen Griff oder eine Halterung, mit der der Paraffinblock mit der darin befindlichen Probe aus dem Förmchen herausgenommen werden kann. Diese Halterung kann nun dazu benutzt werden, um den Paraffinblock mit der darin befindlichen Probe in einen Automaten oder Halbautomaten einzuspannen, mit dem gewünschte Gewebeschnitte aus der Probe herausgeschnitten werden können. Ein solcher Automat bzw. Halbautomat ist unter der Bezeichnung Mikrotom bekannt.

Vorzugsweise sind daher in einer Ausgestaltung Mikrotom und durchströmbarer Behälter so aufeinander abgestimmt, dass der Behälter ganz oder teilweise in das Mikrotom in genannter Weise eingespannt werden kann.

Sind histologische Untersuchungen durchgeführt worden und sollen nun Biomoleküle prozessiert werden, so ist regelmäßig zunächst das Paraffin von dem Teil der paraffinierten Probe zu entfernen, welches weiter prozessiert werden soll. Es werden also beispielsweise zur Untersuchung von Biomolekülen weitere Schnitte mit dem Mikrotom angefertigt. Diese Schnitte werden in einem Mikrozentrifugengefäß gesammelt und zunächst das Paraffin entfernt und zwar im Wesentlichen umgekehrt wie bei der Entwässerung. Es wird zunächst eine Intermediärlösung zugegeben, um das Paraffin aufzulösen. Anschließend wird die Gewebeprobe zentrifugiert und der Überstand mit dem in der Intermediärlösung aufgelösten Paraffin entfernt. Anschließend wird das pelletierte Gewebe mit reinem Alkohol resuspendiert, um die Intermediärlösung zu verdrängen. Nach einer erneuten Zentrifugation und Entfernung des Überstandes kann das Gewebepellet in einem geeigneten Lysepuffer aufgenommen und nach dem Stand der Technik prozessiert werden. Die gereinigten Biomoleküle können dann für die gewünschten Untersuchungen eingesetzt werden.

In einer vorteilhaften Ausgestaltung wird im Rahmen einer histologischen Untersuchung ein Mikroskop eingesetzt, welches mit einem Laser ausgestattet ist. Wird Gewebe mit Hilfe des Mikroskops histologisch untersucht und ein interessierender Bereich gefunden, so kann dieser Bereich mit dem Laser sehr genau herausgeschnitten werden. Mithilfe der vorliegenden Erfindung gelingt es nun besonders einfach, diesen herausgeschnittenen Bereich sofort in Bezug auf Biomoleküle weiter zu untersuchen. Ist der ausgeschnittene Bereich sehr klein, so kann dieser teil des Gewebes direkt in einen Lysepuffer überführt werden, um Biomoleküle wie DANN, RNA und/ oder Protein für weitergehende Untersuchungen zu isolieren.

Der durchströmbare Behälter ist insbesondere an einem Deckel befestigt, mit dem ein Gefäß mit einem darin befindlichen Mittel für das Fixieren und/ oder Stabilisieren verschlossen wird. Der Deckel erfüllt dann eine Doppelfunktion. Er dient zum einen dem Verschließen des Gefäßes mit dem darin befindlichen Mittel für das Fixieren und/ oder Stabilisieren während der Fixierung bzw. Stabilisierung, die sich in der Regel wenigstens über mehrere Stunden erstreckt. Zum anderen dient der Deckel als Griff, um den durchströmbaren Behälter einfach in eine Probe hineinstoßen zu können. Auf diese Weise ist die Handhabung besonders einfach.

In einer Ausgestaltung der Erfindung ist der durchströmbare Behälter, der eine scharfkantige Öffnung umfasst, mit einem Stempel versehen, der beispielsweise von oben durch einen als Griff dienenden Deckel hindurch in den durchströmbaren Behälter hineingeführt werden kann. Auf diese Weise gelingt es besonders einfach, in dem durchströmbaren Behälter befindliches Gewebe wieder herauszudrücken.

Dies ist insbesondere dann von Vorteil, wenn Biomoleküle sofort untersucht werden sollen, also im Anschluss an die Stabilisierung. Dann kann die stabilisierte Probe aus dem durchströmbaren Behälter durch den Stempel herausgedrückt werden und zwar vorzugsweise in die entsprechende Lösung hinein, mit der die Untersuchung der Biomoleküle begonnen wird. Im Allgemeinen handelt es sich zunächst um eine Pufferlösung, in die die Probe gegeben wird, von der Biomoleküle untersucht werden sollen.

Das Vorsehen eines Stempels ist auch deshalb von Vorteil, weil so definiert nur ein Teil der fixierten bzw. stabilisierten Probe aus dem durchströmbaren Behälter herausgedrückt werden kann. Dieser aus dem durchströmbaren Behälter dann herausstehender Teil der Probe kann dann abgeschnitten werden, um es beispielsweise der Untersuchung von Biomolekülen zuzuführen. Der Rest kann dann beispielsweise für histologische Untersuchungen verwendet werden.

Sollen Biomoleküle untersucht werden, so ist es grundsätzlich erforderlich, die Probe aufzuschließen und so zu homogenisieren. Dies geschieht nach dem Stand der Technik beispielsweise durch Ultraschall. Allerdings besteht beim Stand der Technik die Gefahr, dass dabei die interessierenden Moleküle beschädigt werden. In einer Ausgestaltung der Erfindung wird daher der durchströmbare Behälter mit der darin befindlichen stabilisierten Probe in ein weiteres Gefäß mit einer darin befindlichen Flüssigkeit gestellt. Eine Ultraschallquelle wird so platziert, dass Ultraschall zu dem durchströmbaren Behälter gelangt und zwar insbesondere fokussiert auf den durchströmbaren Behälter. Zerkleinert nun der Ultraschall die im durchströmbaren Behälter befindliche Probe, so können die zerkleinerten Gewebestücke durch geeignet durchlässige Wände des durchströmbaren Behälters hindurch in die Flüssigkeit entweichen, die beispielsweise das Mittel zur Stabilisierung sein kann. Auf diese Weise können zerkleinerte Stücke so entweichen, dass diese nicht mehr dem Ultraschall in einer nun nachteilhaften Weise ausgesetzt werden. Auf diese Weise wird das Risiko vermindert, dass die interessierenden Moleküle im Rahmen des Aufschlusses der Probe durch Überexposition in unerwünschter Weise beschädigt werden.

Bei der vorgenannten Ausgestaltung ist dann die Ultraschallquelle insbesondere so eingestellt und beschränkt, dass diese im Wesentlichen nur den durchströmbaren Behälter mit darin befindlicher Probe erfasst und in diesem Sinne auf den durchströmbaren Behälter fokussiert ist.

Grundsätzlich ist es möglich, anstelle von Ultraschall ein anderes Mittel zu wählen, welches die in dem durchströmbaren Behälter befindliche Probe aufschließt mit der Folge, dass hinreichend zerkleinerte Teile der Probe nach außen entweichen und von der weiteren mechanischen Behandlung damit vorteilhaft ausgeschlossen werden.

Die Erfindung wird anhand der nachfolgenden Figuren näher erläutert.

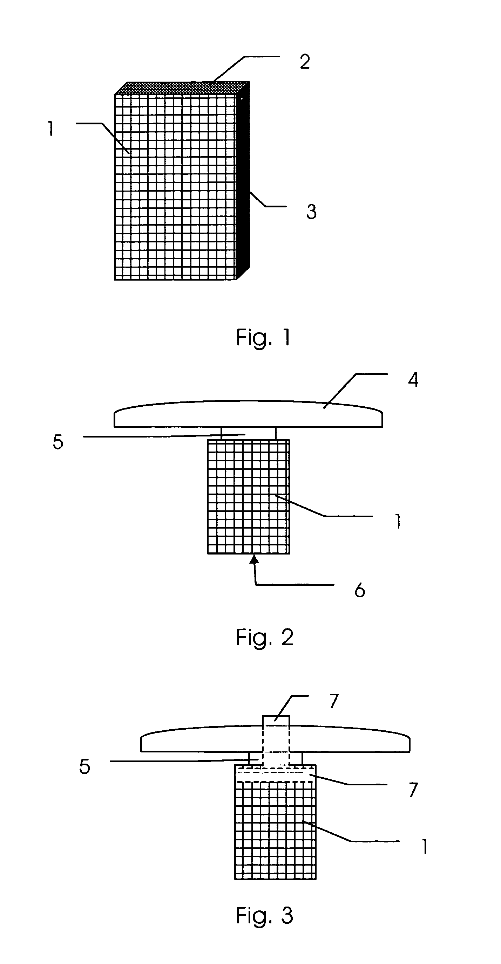

Figur 1 zeigt eine typische Grundform des durchströmbaren Behälters, der für das Fixieren einer Probe eingesetzt wird. Der Behälter umfasst eine relativ großflächige Vorderseite 1 und Rückseite, die beispielsweise gitterförmig sind und daher von einer Flüssigkeit durchströmt werden können. Die Vorderseite kann ein klappbarer Deckel sein und die Rückseite der Boden des durchströmbaren Behälters. Der Abstand zwischen Vorderseite und Rückseite ist relativ klein und beträgt nur wenige Millimeter und zwar insbesondere nicht mehr als 5 Millimeter. Dadurch wird sichergestellt, dass eine im durchströmbaren Behälter befindliche Probe von einer Fixierlösung hinreichend schnell durchtränkt werden kann. Die Wände 2 und 3 des durchströmbaren Behälters können ebenfalls durchströmbar sein. Aus Gründen der Stabilität ist sind aber feste, geschlossene Wände 2 und 3 zu bevorzugen.

Figur 2 zeigt eine seitliche Aufsicht auf den durchströmbaren Behälter mit Vorderwand 1, der an einem Deckel 4 durch einen Steg 5 befestigt ist und zwar vorzugsweise lösbar, also zum Beispiel durch Formschluss, so zum Beispiel durch einrastende Kupplungsmittel. Der Deckel kann dann einerseits als Griff verwendet werden, um den durchströmbaren Behälter zu halten, ohne diesen zu verschmutzen oder umgekehrt ohne durch den Behälter bzw. dessen Inhalt verschmutzt zu werden. Andererseits kann der Deckel dem Verschließen eines Gefäßes mit darin befindlichem Mittel für das Fixieren und/ oder Stabilisieren dienen, wenn der durchströmbare Behälter in eine entsprechende Flüssigkeit eingetaucht werden soll. Ist es für die Fixierung bzw. Stabilisierung erforderlich, eine Probe von einer Lösung zu einer nächsten zu transferieren, so kann die im durchströmbaren Behälter befindliche Probe mit Hilfe des Deckels transferiert werden, ohne das der durchströmbare Behälter geöffnet werden muss. Aufgrund einer lösbaren Befestigung kann der durchströmbare Behälter weiter verwendet werden, so zum Beispiel, um den durchströmbaren Behälter mit darin befindlicher fixierter bzw. stabilisierter Probe in einen entsprechend angepassten Entwässerungsautomaten zu überführen.

Bei der in Figur 2 gezeigten Ausführungsform ist die Unterseite 6 des Behälters vorzugsweise offen oder kann geöffnet werden. Die Ränder sind dann derart scharfkantig ausgebildet, dass diese Unterseite in eine typische Probe hineingestoßen werden kann, um so den Behälter mit Probenmaterial zu befüllen und zugleich das Probenmaterial geeignet zu dimensionieren.

In Figur 3 wird eine Ausführungsform mit einem Stempel 7 dargestellt, mit dem Probenmaterial aus dem durchströmbaren Behälter herausgedrückt werden kann.

Aus Kostengründen besteht der durchströmbare Behälter vorzugsweise aus Kunststoff. Es handelt sich dann insbesondere um einen Wegwerfartikel. Für jede neue Probe wird dann ein neuer, noch unbenutzter durchströmbarer Behälter verwendet, was die Handhabung vereinfacht.

Ein durchströmbarer Behälter kann aber auch aus Metall bestehen und zwar vor allem dann, wenn dieser eine scharfe Kante aufweisen soll, um in Gewebe hineinstoßen zu können.

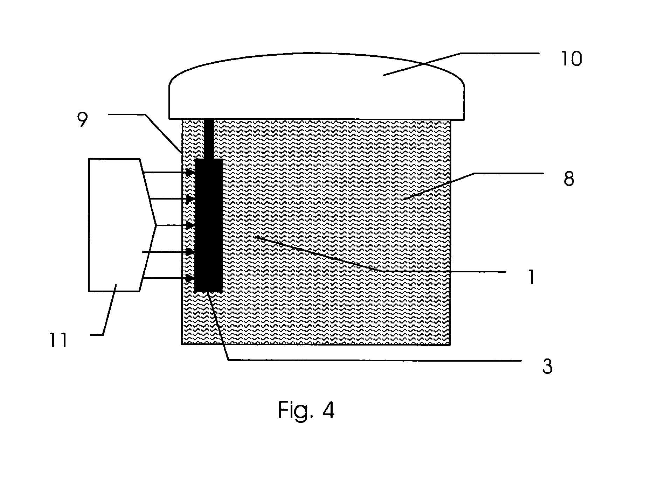

Fig. 4 zeigt den Aufbau eines durchströmbaren Behälters mit einer darin befindlichen stabilisierten Probe, die in ein Gefäß mit einer darin befindlichen Flüssigkeit 8 eingetaucht ist. Der durchströmbare Behälter befindet sich nahe bei einer Gefäßwand 9 und ist vorzugsweise an dem Gefäßdeckel befestigt und zwar insbesondere lösbar und/ oder durch Formschluss. Eine Ultraschallquelle 11 ist so nahe dieser Gefäßwand 9 platziert und so dimensioniert, dass Ultraschall den durchströmbaren Behälter erreicht und ansonsten nicht weiter in das Gefäß gelangt, wie durch die Pfeile angedeutet wird. Ultraschall schließt so die im durchströmbaren Behälter befindliche Probe auf, die im Anschluss daran durch eine gitterförmige Wand hindurch in die Flüssigkeit 8 entweichen kann, die sich außerhalb des durchströmbaren Behälters befindet. Damit Ultraschall in den durchströmbaren Behälter gelangen kann, ist der Ultraschall so ausgerichtet, dass dieser auf eine durchströmbare Wand auftrifft.

Figur 5 zeigt die in Beispiel 1 erklärte Analyse von RNA-Präparaten aus Rattenleber auf einem Agilent-Bioanalyzer-Gerät. A: Agilent-Gel, B: Elektropherogramm und RIN-Wert.

Figur 6 zeigt die in Beispiel 1 erklärte Analyse von RNA-Präparaten aus Rattenniere auf einem Agilent-Bioanalyzer-Gerät. A: Agilent-Gel, B: Elektropherogramm und RIN-Wert.

Figur 7 zeigt die in Beispiel 1 erklärte Analyse von RNA-Präparaten aus Rattenmilz auf einem Agilent-Bioanalyzer-Gerät. A: Agilent-Gel, B: Elektropherogramm und RIN-Wert.

Figur 8 zeigt auf Agarosegel analysierte DNA, die gemäß Beispiel 2 aus (a) Rattenleber, (b) -niere, (c) -milz und (d) -darm hergestellt worden ist.

Figur 9 zeigt eine Hematoxylin/Eosin-Färbung von Rattenleber (a) im Überblick, (b) mit 100facher und (c) mit 630facher Vergrößerung. Das Gewebe wurde gemäß Beispiel 3 fixiert und verarbeitet.

Figur 10 zeigt eine Hematoxylin/Eosin-Färbung von Rattenniere (a) im Überblick, (b) mit 100facher und (c) mit 630facher Vergrößerung. Das Gewebe wurde gemäß Beispiel 3 fixiert und verarbeitet.

Figur 11 zeigt eine Hematoxylin/Eosin-Färbung von Rattenmilz (a) im Überblick, (b) mit 100facher und (c) mit 630facher Vergrößerung. Das Gewebe wurde gemäß Beispiel 3 fixiert und verarbeitet.

Die Erfindung wird nun anhand der nachstehenden Beispiele ausführlicher beschrieben. Die Beispiele werden nur zum Zweck der Veranschaulichung bereitgestellt und dürfen nicht so ausgelegt werden, dass sie die Erfindung auf die gezeigten Ausführungsformen beschränken.

### Beispiel 1

### RNA-Stabilisierung in Gewebe, das in einem durchströmbaren Behälter fixiert wurde:

Rattenleber, -niere und -milz wurden direkt nach der Entnahme in Scheiben mit einer Dicke von etwa 3 mm geschnitten. Zum Fixieren wurden die Gewebeproben in einen durchströmbaren Behälter mit einer Länge von 4 cm, einer Breite von 2,7 cm und einer Tiefe von 5 mm angeordnet. Der durchströmbare Behälter mit den Gewebeproben wurde vollständig in eine 500 ml-Flasche eingetaucht, die mit 250 ml einer Fixierlösung gemäß Zusammensetzung A nach PCT/EP/2008052371 gefüllt war. Die Fixierlösung umfasste (Methanol, Essigsäure, 1,3-Butandiol und PEG300). Nach 2 Stunden wurde das Fixieren beendet, indem die Gewebeproben in dem durchströmbaren Behälter in eine andere 500 ml-Flasche überführt wurde, die mit 250 ml einer Lösung gemäß Zusammensetzung B nach PCT/EP/2008052371 umfassend Ethanol (p.a.) und 1,3-Butandiol, gefüllt war. Nach 20 h Inkubation wurden die Proben in dem durchströmbaren Behälter als erster Schritt der Verarbeitung in 70%-iges Ethanol überführt.

Die Gewebe-Prozessierung, welche die Dehydration, das Klären und die Infiltration mit Paraffin umfasste, wurde unter Verwendung eines Leica TP1020-Prozessors automatisiert durchgeführt. Der durchströmbare Behälter wurde durch Ethanol mit zunehmenden Konzentrationen geführt. Als Zwischenschritt zwischen der Dehydration und der Infiltration mit dem Einbettmedium wurde ein Klären mit Xylol durchgeführt. Hohlräume und Zellen des Gewebes wurden mit flüssigem Paraffin (Paraplast XTRA mit niedrigem Schmelzpunkt, Roth Inc.) bei 56 °C getränkt (Einzelheiten in Tabelle 1). Um den für die Mikrotomie notwendigen Träger zu erhalten, wurden die Proben in das gleiche Paraffin, wie es zur Infiltration verwendet wurde, eingebettet.

Als Ausgangsmaterial der RNA-Extraktion wurden frische Schnitte der Paraffinblöcke verwendet. Die Paraffinblöcke wurden mit einem Rotationsmikrotom (Leica RM2245) geschnitten, wobei von jeder Probe 5 Scheiben mit einer Dicke von jeweils 10 µm abgeschnitten und in einem Mikrozentrifugenröhrchen gesammelt wurden. Das Entfernen des Paraffins wurde durch Zusetzen von 1 ml Xylol, Vortexen und 2 min Zentrifugieren bei 14000 Upm durchgeführt. Der Überstand wurde entfernt und das Pellet in 1 ml 100%-igem Ethanol gelöst.

Nach 2 min Zentrifugieren bei 14000 Upm und Entfernen des Ethanols wurde das Pellet in 150 µl des RLT-Puffers (kommerziell erhältlich von Fa. QIAGEN GmbH, Deutschland) (enthaltend GTC, pH = 7, umfassend 0,143 M β-Mercaptoethanol) gelöst. Nach Zusetzen von 295 *µ*l Wasser und 5 *µ*l Proteinase K (> 600 mAU/ml) wurde der Aufschluss mit einer Dauer von 10 min bei 55 °C auf einem Schüttler/Inkubator bei 1400 Upm durchgeführt. Zum Homogenisieren wurde das Lysat einer QIAshredder-Spin-Säule (kommerziell erhältlich von Fa. QIAGEN GmbH, Deutschland) zugeführt und 2 min bei 14000 Upm zentrifugiert. Das durchgeströmte Material wurde mit 1225 *µ*l Ethanol (100 %-ig) gemischt und einer RNeasy-MinElute-Spin-Säule (kommerziell erhältlich von Fa. QIAGEN GmbH, Deutschland) zugeführt. Die Lysate wurden durch die Zentrifugation durch die Membran geführt, so dass die RNA von der Membran absorbiert wurde. Verunreinigungsstoffe wurden durch zweimaliges Waschen der Membran mit Waschpuffer RW1 (kommerziell erhältlich von Fa. QIAGEN GmbH, Deutschland), umfassend GTC, mit pH = 7,5 und Ethanol, entfernt. Zwischen den beiden Waschvorgängen wurde verbliebene DNA von der Membran entfernt, indem 10 *µ*l DNase (etwa 30 Kunitz-Einheiten), gemischt mit 70 *µ*l Puffer RDD (kommerziell erhältlich von Fa. QIAGEN GmbH, Deutschland) mit pH = 7,5 auf die Membran pipettiert und 15 min bei Umgebungstemperatur inkubiert wurde. Nach zwei weiteren Waschvorgängen mit 500 µl des Puffers RPE (kommerziell erhältlich von Fa. QIAGEN GmbH, Deutschland) (mit pH = 7,5 und 80 %-igem Ethanol) wurde die Membran durch 1 min Zentrifugieren mit Maximalgeschwindigkeit, 14000 Upm, getrocknet. Schließlich wurde die RNA eluiert, indem 30 *µ*l Puffer BR5 (kommerziell erhältlich von Fa. QIAGEN GmbH, Deutschland) (pH = 7) auf die Membran pipettiert wurde, gefolgt von 1 min Inkubieren bei Umgebungstemperatur und 1 min Zentrifugieren bei 14000 Upm. Alle Extraktionen wurden in dreifacher Ausfertigung durchgeführt.

Die Unversehrtheit und die Größenverteilung der gesamt-RNA wurde auf einem Agilent 2100 Bioanalyzer-Gerät unter Verwendung des RNA 6000 Nano-Assays gemäß den Anweisungen des Herstellers analysiert.

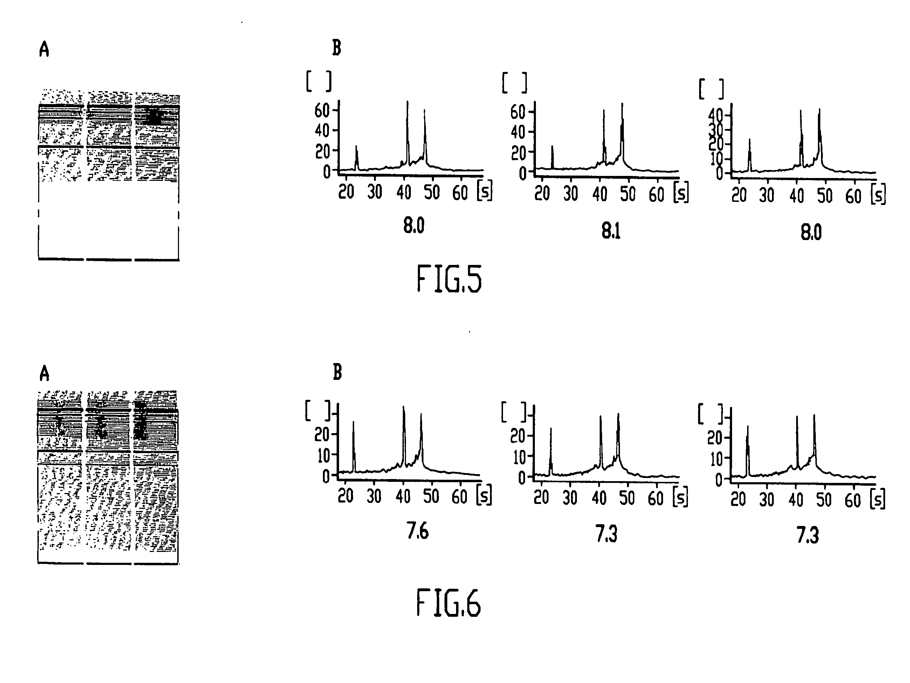

In den Figuren 5 bis 7 sind die Agilent-Gele, die entsprechenden Elektropherogramme und RIN-Werte ("RNA integrity number") für jeweils dreifach ausgeführte Analysen von Leber, Niere und Milz gezeigt.

Die Analyse der RNA auf dem Agilent-Bioanalyzer-Gerät zeigte alle Hauptmerkmale einer RNA mit hohem Molekulargewicht ohne Abbau. Auf dem Gel (Figur 5-7, A) sind zwei ribosomale Banden von 18S- und 28S-rRNA als scharfe Banden beinahe ohne Verwischung sichtbar. Auf dem Elektropherogramm (Figur 5-7, B) entsprechen die beiden Banden 2 ribosomalen Maxima. Die RIN Werte der RNA variieren zwischen 7 und 9 auf einer Skala von 1 bis 10.

Schlussfolgerung: Das Fixieren in einem durchströmbaren Behälter in Kombination mit der in PCT/EP/2008052371 beschriebenen Fixierchemie ergibt eine Konservierung von RNA in Gewebeproben, sogar nach einer Verarbeitung und Paraffineinbettung.

**Tabelle 1: Prozessierung von Gewebeproben in dem durchströmbaren Behälter auf einem Leica TP1020 Gewebe-Prozessor-Gerät**

| Schritt | Medium | Dauer | Temperatur |
|---|---|---|---|
| 1 | 70 % Ethanol | 15 min | |
| 2 | 80 % Ethanol | 30 min | |
| 3 | 90 % Ethanol | 60 min | |
| 4 | 99 % Ethanol | 60 min | |
| 5 | 99 % Ethanol | 60 min | |
| 6 | Isopropanol | 60 min | |
| 7 | Isopropanol | 60 min | |
| 8 | Xylol | 60 min | |
| 9 | Xylol | 60 min | |
| 10 | Paraplast-XTRA und Xylol (1:1 -Gemisch) | 60 min | 50 °C |
| 11 | Paraplast-XTRA | 60 min | 56 °C |
| 12 | Paraplast-XTRA | 90 min | 56 °C |

### Beispiel 2

### DNA-Stabilisierung in Gewebe, das in einem durchströmbaren Behälter fixiert wurde

Gewebeproben von Rattenleber, -niere, -milz und -darm wurden wie in Beispiel 1 beschrieben in dem durchströmbaren Behälter in Reagenzien gemäß den Zusammensetzungen A und B gemäß PCT/EP/2008052371 stabilisiert, verarbeitet und in Paraffin eingebettet (mit geringfügigen Änderungen: Fixieren in 300 ml Reagens gemäß Zusammensetzung A und Beenden des Fixierens nach 6 h).

Als Ausgangsmaterial der DNA-Extraktion wurden frische Schnitte der Paraffinblöcke verwendet. Die Paraffinblöcke wurden mit einem Rotationsmikrotom (Leica RM2245) geschnitten, wobei von jeder Probe 5 Scheiben mit einer Dicke von jeweils 10 µm abgeschnitten und in einem Mikrozentrifugenröhrchen gesammelt wurden. Das Entfernen des Paraffins wurde durch Zusetzen von 1 ml Xylol, Vortexen und 2 min Zentrifugieren bei 14000 Upm durchgeführt. Der Überstand wurde entfernt und das Pellet in 1 ml 100%-igem Ethanol gelöst. Nach 2 min Zentrifugieren bei 14000 Upm und Entfernen des Ethanols wurde das Pellet 10 min bei 37 °C inkubiert, um Restethanol abzudampfen.

Das so erhaltene Pellet wurde in 180 µl Puffer ATL (kommerziell erhältlich von Fa. QIAGEN GmbH, Deutschland) (pH 8,3-8,5) gelöst und durch Zusetzen von 20 *µ*l Proteinase K (Aktivität 600 mAU/ml) verdaut. Der Proteinase-Verdau erfolgte eine Stunde bei 56 °C unter ständigem, leichtem Mischen der Proben (1400 Upm). Die RNA wurde durch Zusetzen von 4 µl RNase A (100 mg/ml) und 2 min Inkubieren bei Umgebungstemperatur aus den Proben entfernt. Nach Zusetzen von 200 µl des Lysepuffers AL (kommerziell erhältlich von Fa. QIAGEN GmbH, Deutschland) (umfassend GuHCl, pH 6,0), weiteren 10 min Inkubieren bei 70 °C und Zusetzen von 200 *µ*l Ethanol (100 %-ig) wurden die Lysate auf die Silicamembran einer DNeasy®-Mini-Spin-Säule (kommerziell erhältlich von Fa. QIAGEN GmbH, Deutschland) pipettiert. Die Lysate wurden durch Zentrifugieren (1 min, 8000 Upm) durch die Membran geführt, so dass die DNA von der Membran absorbiert werden konnte. Verunreinigungsstoffe wurden durch Waschen der Membran mit 500 µl des Puffers AW1 (kommerziell erhältlich von Fa. QIAGEN GmbH, Deutschland) (GuHCl, enthaltend 57 %-iges EtOH) und einen zweiten Waschvorgang mit Puffer AW2 (kommerziell erhältlich von Fa. QIAGEN GmbH, Deutschland) (pH 7,5, enthaltend 70 %-iges EtOH) entfernt. Die Waschreagenzien wurden jeweils durch 1 min Zentrifugieren bei 8000 Upm durch die Membran geführt. Nach dem letzten Waschvorgang wurde die Membran durch 3 min Zentrifugieren mit Maximalgeschwindigkeit bei 14000 Upm, getrocknet. Schließlich wurde die DNA eluiert, indem 50 *µ*l Elutionspuffer AE (kommerziell erhältlich von Fa. QIAGEN GmbH, Deutschland) (10 mM Tris-Cl mit pH 9,0, 0,5 mM EDTA) direkt auf die Membran pipettiert wurde, gefolgt von 1 min Inkubieren bei Umgebungstemperatur und 1 min Zentrifugieren bei 14000 Upm. Alle Extraktionen wurden in dreifacher Ausfertigung durchgeführt.

Die Unversehrtheit und die Größe der gesamten DNA wurde durch Agarose-Gelelektrophorese analysiert. Dabei wurden 10 µl des entsprechenden Eluats mit 5 µl Laufpuffer (umfassend 50 %-iges Glycerin und Bromophenolblau) gemischt. Die Proben wurden auf ein 0,8 % Agarose-Gel in 1x TBE-Puffer aufgetragen. Die Elektrophorese wurde über einen Zeitraum von 120 min bei etwa 3,3 Volt pro cm Länge der Elektrophoresekammer durchgeführt. Die DNA wurde durch Färben mit Ethidiumbromid sichtbar gemacht.

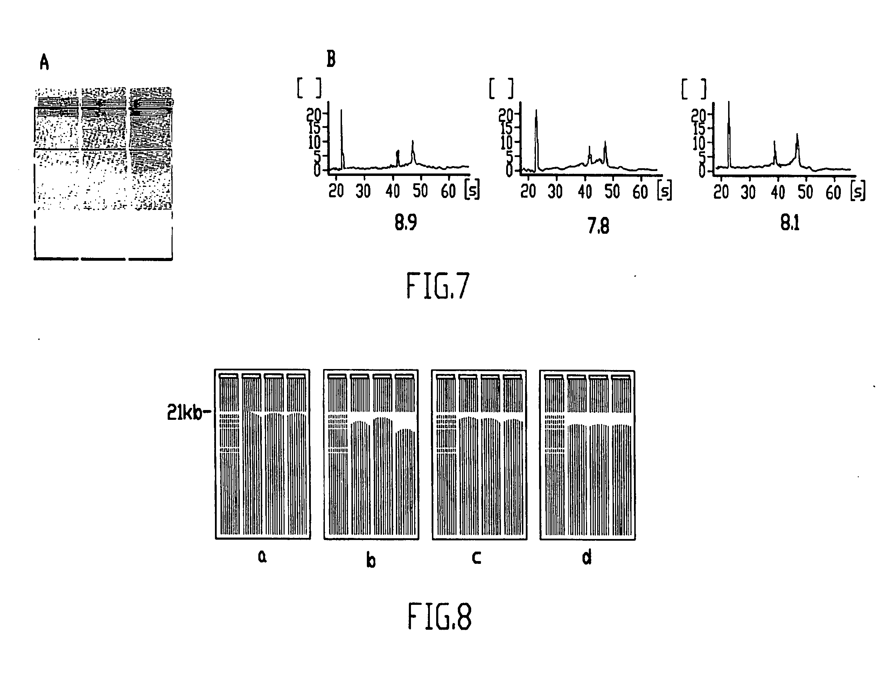

Die Agarose-Gelelektrophorese zeigte, dass die DNA ein hohes Molekulargewicht aufwies. Auf dem Agarose-Gel (Fig. 8) ist die DNA aus (a) Leber, (b) Niere, (c) Milz und (d) Darm als deutliche Einzelbande mit einem Molekulargewicht von etwa 21 kD zu sehen. Es ist beinahe keine Verwischung, die einen DNA-Abbau anzeigt, zu erkennen.

Schlussfolgerung: Das Fixieren in einem durchströmbaren Behälter in Kombination mit der in PCT/EP/2008052371 beschriebenen Fixierchemie ergibt eine Konservierung von DNA mit hohem Molekulargewicht in Gewebeproben sogar nach einer Verarbeitung und Paraffineinbettung.

### Beispiel 3:

### Konservierung der Histologie von Gewebe, das in einem durchströmbaren Behälter fixiert ist

Gewebeproben von Rattenleber, -niere, -milz und -darm wurden wie in Beispiel 1 beschrieben in dem durchströmbaren Behälter in Reagenzien gemäß den Zusammensetzungen A und B gemäß PCT/EP/2008052371 fixiert und stabilisiert. Anschließend wurden die Proben prozessiert und in Paraffin eingebettet. Im Gegensatz zu Beispiel 1 wurde für 6 h fixiert und 30h nach Überführung in ein Reagenz mit der Zusammensetzung B gemäß PCT/EP/2008052371 mit der Prozessierung begonnen. Die Prozessierung auf einem Leica TP1020-Gerät wurde gemäß dem in Tabelle 1 beschriebenen Protokoll durchgeführt, wobei bei Schritt 8-10 Neoclear anstelle von Xylol und bei der Infiltration mit Paraffin eine Temperatur von 60 °C verwendet wurde (Schritte 11 und 1 2, Tabelle 1).

Zur histologischen Analyse wurden mittels eines Rotationsmikrotoms (Leica RM2245) Gewebeschnitte mit Dicken von 4 µm angefertigt und auf Glasplättchen befestigt. Das Färben mit Haematoxylin und Eosin wurde mit Farbstoffen von Sigma Inc. manuell durchgeführt, wobei ein Standardprotokoll eingehalten wurde (Tabelle 2).

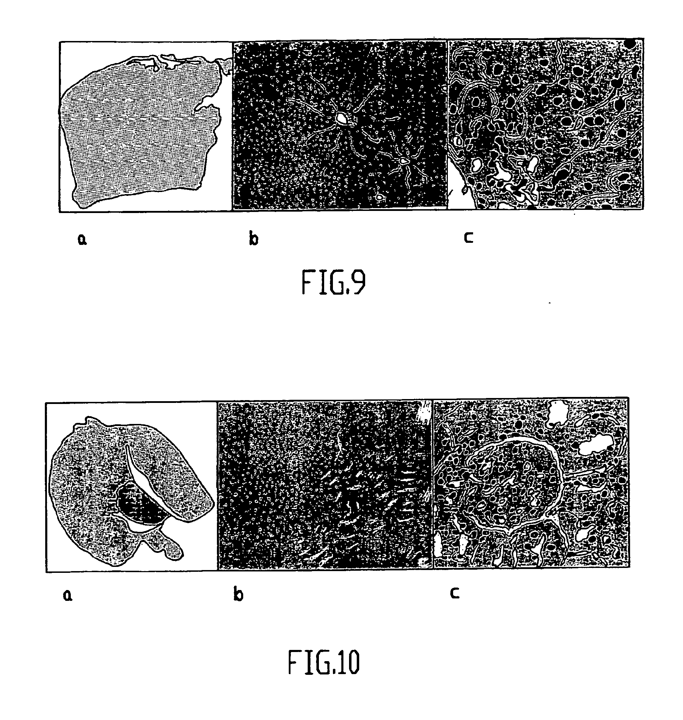

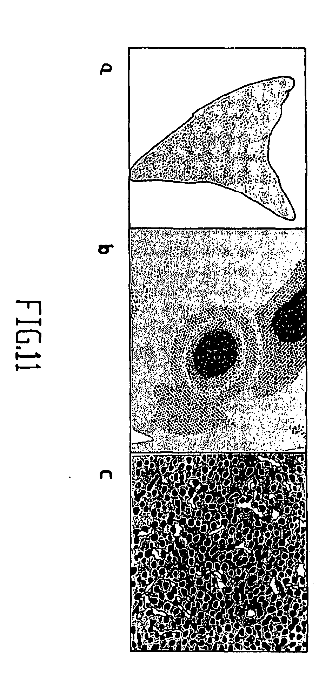

Die Figuren 9 bis 11 zeigen die Morphologie von Leber (Fig. 9), Niere (Fig. 10) und Milz (Fig. 11). Von links nach rechts wird zunächst ein Überblick über den gesamten Schnitt, gefolgt von 100- und 630-fachen Vergrößerungen, gezeigt.

Die Überblicke zeigen, dass die Gesamtmorphologie und die zelluläre Struktur der einzelnen Gewebe intakt sind. Höhere Vergrößerungen (100-fach) zeigen typische morphologische Strukturen wie Leberläppchen (Fig. 9), Nierenglomeruli (Fig. 10) und Follikel mit Keimzentrum der Milz (Fig. 11). Bei noch höherer Vergrößerung (630-fach) können einzelne Zellen unterschieden werden. Der Zellkern ist gegen das Zytoplasma sichtbar, und verschiedene Zellarten können erkannt werden.

Schlussfolgerung: Das Fixieren in einem durchströmbaren Behälter in Kombination mit der in der PCT/EP/2008052371 beschriebenen Fixierchemie ergibt eine besonders vorteilhafte Konservierung der Histologie in Gewebeproben.

**Tabelle 2: Protokoll der Färbung mit Haematoxylin und Eosin**

| Inkubation/Medium | Dauer [min] |
|---|---|
| Inkubation bei 70 °C | 10 |
| Rotihistol (Xylolersatz, Roth Inc.) | 10 |
| Rotihistol | 10 |
| 96 % Ethanol | 5 |
| 80 % Ethanol | 5 |
| 70 % Ethanol | 5 |
| 60 % Ethanol | 5 |
| Wasser | 3 |
| Haematoxylin nach Mayer | 5 |
| Wasser | 0,5 |
| 70 % Ethanol mit 1 % HCl | 0,5 |
| Wasser | 5 |
| Eosin | 5 |
| Wasser | 1 |
| 96 % Ethanol | 3 |
| 96 % Ethanol | 5 |
| 100 % Isopropanol | 10 |
| Rotihistol | 10 |
| Rotihistol | 10 |
| Befestigen mit Entellan | |

## Patentansprüche

1. Verfahren für das Fixieren und/ oder Stabilisieren einer Probe, indem die Probe in einen durchströmbaren Behälter (1, 2, 3) gegeben wird, wobei der durchströmbare Behälter (1, 2, 3) eine scharfkantige Öffnung aufweist, die scharfkantige Öffnung in die Probe gestoßen wird, im Anschluss daran der so in den durchströmbaren Behälter gebrachte Teil der Probe von der übrigen Probe abgetrennt wird, und der so mit der Probe befüllte Behälter in Mittel für das Fixieren und/ oder Stabilisieren eingetaucht und die Probe fixiert und/ oder stabilisiert wird **dadurch gekennzeichnet, dass** der Behälter eine relativ großflächige, siebförmige Vorderseite (1) und Rückseite aufweist und der Abstand zwischen Vorderseite und Rückseite relativ klein ist.

2. Verfahren nach Anspruch 1, bei dem die Bauhöhe des durchströmbaren Behälters maximal 10 mm, vorzugsweise maximal 5 mm beträgt.

3. Verfahren nach dem vorhergehenden Anspruch, bei dem die Wände (1) des Behälters, die nicht mehr als 10 mm, vorzugsweise nicht mehr als 5 mm auseinander liegen, siebförmig, gitterförmig oder mit Schlitzen versehen sind.

4. Verfahren nach einem der vorhergehenden Ansprüche, bei dem als Mittel für das Fixieren und/ oder Stabilisieren einer Probe eine Polyol-haltige Zusammensetzung eingesetzt wird.

5. Verfahren nach einem der vorhergehenden Ansprüche, bei dem als Mittel für das Fixieren und/ oder Stabilisieren einer Probe eine Zusammensetzung verwendet wird umfassend 1 bis zu 100 Gew.-% mindestens eines Polyols sowie 0 bis 99 Gew.-% mindestens eines Additivs, wobei die Gesamtmenge der beiden genannten Komponenten 100 Gew.-% beträgt.

6. Verfahren nach einem der beiden vorhergehenden Ansprüche, bei dem es sich bei dem Polyol um Diol, Triol, Tetraol, Pentaol, Hexaol, Heptaol, Octaol oder Nonaol handelt.

7. Verfahren nach einem der drei vorhergehenden Ansprüche, bei dem das Polyol 2 bis 20 Kohlenstoffatome aufweist.

8. Verfahren nach einem der vier vorhergehenden Ansprüche, bei dem das Polyol ausgewählt aus der Gruppe umfassend 1,2-Ethandiol, 1,2-Propandiol, 1,3-Propandiol, 1,2-Butandiol, 1,3-Butandiol, 1,4-Butandiol, 2,3-Butandiol, 1,2-Pentandiol, 1,3-Pentandiol, 1,4-Pentandlol, 1,5-Pentandiol, 2,3-Pentandiol, 2,4-Pentandiol, 1,2-Hexaudiol, 1,3-Hexandiol, 1,4-Hexandiol, 1,5-Hexandiol, 1,6-Hexandiol, 2,3-Hexandiol, 2,4-Hexandiol, 2,5-Hexandiol, 3,4-Hexandiol, 1,2,3-Propantriol, 1,2,3-Butantriol, 1,2,4-Butantriol, 1,2,3-Pentantriol, 1,2,4-Pentantriol, 1,2,5-Pentantriol, 2,3,4-Pentantriol, 1,2,3-Hexantriol, 1,2,4-Hexantriol, 1,2,5-Hexanttiol, 1,2,6-Hexantriol, 2,3,4-Hexantriol, 2,3,5-Hexantriol, 3-Methyl-1,3,5-Pentantriol, Trimethylolpropanol, Pentaerythritol, Dlethylenglykol, Dipropylenglykol, Triethylenglykol, Tripropylenglykol, Polyethylenglykol und Polypropylenglykol.

9. Verfahren nach einem der vorhergehenden Ansprüche, bei dem als Mittel für das Fixieren und/ oder Stabilisieren einer Probe eine Mischung aus mindestens zwei Polyolen verwendet wird.

10. Verfahren nach einem der vorhergehenden Ansprüche, bei dem das Mittel für das Fixieren und/ oder Stabilisieren eine Probe ein Additiv umfasst, welches ausgewählt ist aus der Gruppe umfassend Detergentien, Inhibitoren, welche den Abbau von Nukleinsäuren oder Proteinen hemmen, Viskositätsregulierer, Farbstoffe, Pufferverbindungen, Konservierungsstoffe, Komplexbildner, Reduktionsmittel, Substanzen, welche die Permeabilität von Zellen verbessern, chaotrope Substanzen, Fixative, weitere, von Polyolen verschiedene Lösungsmittel und/ oder Mischungen aus mindestens zwei dieser Additive.

11. Verfahren nach einem der vorhergehenden Ansprüche, bei dem die Probe fixiert oder stabilisiert wird, indem diese
i) mit einer ersten nichtwässrigen Zusammensetzung (A) kontaktiert wird, umfassend:
(a1) 10 bis 90 Vol.-% Methanol und
(a2) wenigstens einen zusätzlichen Zusatzstoff und
(a3) gegebenenfalls eine Säure,
ii) Überführen des biologischen Materials in eine zweite Zusammensetzung (B), umfassend bis zu 99 Vol.-% Ethanol.

12. Verfahren nach dem vorhergehenden Anspruch, bei dem die nichtwässrige Zusammensetzung (A) folgendes umfasst:
(α1) 10 bis weniger als 80 Vol.-% Methanol und
(α2) wenigstens einen zusätzlichen Zusatzstoff und
(α3) eine Säure.

13. Verfahren nach dem vorhergehenden Anspruch, bei dem die Komponente (a1) Methanol in einem Umfang von 10 bis weniger als 70 Vol.-% enthalten, vorzugsweise zu 60 Vol.-% oder zu 50 Vol.-% enthalten ist.

14. Verfahren nach einem der vier vorhergehenden Ansprüche, bei dem der Zusatzstoff (a2) der ersten Zusammensetzung von Schritt (i) ein zusätzliches Lösungsmittel ist, das von Methanol verschieden ist, oder ein Zusatzstoff, der ausgewählt ist aus der Gruppe umfassend Detergenzien und Inhibitoren, welche den Abbau von Nukleinsäuren oder Proteinen hemmen, DEPC, Alkylierungsmittel, Acetyllerungsmittel, Halogenierungsmittel, Nucleotide, nucleotldanaloge Verbindungen, Aminosäuren, aminosäureanaloge Verbindungen, Viskositötsregulatoren, Farbstoffe, Puffersubstanzen, Konservierungsmittel, Komplexierungsmittel, Reduktionsmittel, Oxldierungsmittel, Stoffe, welche die Permeabilität von Zellen verbessern, chaotrope Stoffe, wie z. B. Guanidiniumlsothiocyanat oder Guanldiniumhydrochlorid oder chaotrope Salze mit Anionen, sowie Gemische von wenigstens zwei bis sechs dieser Zusatzstoffe.

## Claims

1. A method for fixing and/or stabilizing a sample by placing the sample in a flow-through receptacle (1, 2, 3), wherein the flow-through receptacle (1, 2, 3) has a sharp-edged opening, the sharp-edged opening is pushed into the sample, followed by separation from the remaining sample of that portion of the sample placed in the flow-through receptacle (1, 2, 3), and the receptacle filled with the sample is immersed in agents for fixing and/or separating and the sample is fixed and/or stabilized, **characterised in that** the receptacle has a relatively large-area, sieve-type front surface (1) and rear surface and the distance between the front surface (1) and rear surface is relatively small.

2. The method according to claim 1, wherein the design height of the flow-through receptacle is maximally 10 mm, preferably maximally 5 mm.

3. The method according to the preceding claim, wherein the walls (1) of the receptacle which are spaced apart not more than 10 mm, preferably not more than 5 mm, are sieve-type, grid-type or are provided with slits.

4. The method according to one of the preceding claims, wherein as an agent for fixing and/or stabilizing a sample a polyol containing composition is used.

5. The method according to one of the preceding claims, wherein as an agent for fixing and/or stabilizing a sample a composition is used comprising 1 up to 100 % by weight of at least one polyol, and 0 through 99 % by weight of at least one additive, wherein the overall amount of both above-mentioned components is 100 % by weight.

6. The method according to one of the two preceding claims, wherein the polyol is a diol, triol, tetraol, pentaol, hexao!, heptaol, octaol, or nonaol.

7. The method according to one of the three preceding claims, wherein the polyol has 2 to 20 carbon atoms.

8. The method according to one of the four preceding claims, wherein the polyol is selected from the group comprising 1,2-ethane diol, 1,2-propane diol, 1,3-propane diol, 1,2-butane diol, 1,3-butane diol, 1,4-butane diol, 2,3-butane diol, 1,2-pentane diol, 1,3-pentane diol, 1,4-pentane diol, 1,5-pentane diol, 2,3-pentane diol, 2,4-pentane diol, 1,2-hexane diol, 1,3-hexane diol, 1,4-hexane diol, 1,5-hexane diol, 1,6-hexane diol, 2,3-hexane diol, 2,4-hexane diol, 2,5-hexane diol, 3,4-hexane diol, 1,2,3-propane triol, 1,2,3-butane triol, 1,2,4-butane triol, 1,2,3-pentane triol, 1,2,4-pentane triol, 1,2,5-pentane triol, 2,3,4-pentane triol, 1,2,3-hexane triol, 1,2,4-hexane triol, 1,2,5-hexane triol, 1,2,6-hexane triol, 2,3,4-hexane triol, 2,3,5-hexane triol, 3-methyle-1,3,5-pentane triol, trimethylol propanol, pentaerythritol, diethylene glycol, dipropylene glycol, triethylene glycol, tripropylene glycol, polyethylene glycol, and polypropylene glycol.

9. The method according to one of the preceding claims, wherein as an agent for fixing and/or stabilizing a sample a mixture of at least two polyols is used.

10. The method according to one of the preceding claims, wherein the agent for fixing and/or stabilizing a sample comprises an additive that is selected from the group comprising detergents, inhibitors, which inhibit degradation of nucleic acids or proteins, viscosity regulators, dyes, buffer compounds, preservatives, complexing agents, reducing agents, substances, which increase permeability of cells, chaotropic substances, fixatives, other solvents different from polyols and/or mixtures of at least two of these additives.

11. The method according to one of the preceding claims, wherein the sample is fixed or stabilized by
i) contacting it with a first non-aqueous composition (A)
comprising:
(a1) 10 to 90 % by volume of methanol and
(a2) at least one additional additive and
(a3) eventually an acid,
ii) converting the biological material into a second composition (B) comprising up to 99 % by volume of ethanol.

12. The method according to the preceding claim, wherein the non-aqueous composition comprises:
(a1) 10 to less than 80 % by volume of methanol and
(a2) at least one additional additive and
(a3) an acid.

13. The method according to the preceding claim, wherein the methanol component (a1) is contained in an amount of 10 to less than 70 % by volume, preferably 60 % by volume or 50 % by volume.

14. The method according to one of the four preceding claims, wherein the additive (a2) of the first composition of step (i) is an additional solvent that is different from methanol, or is an additive that is selected from the group comprising detergents and inhibitors, which inhibit degradation of nucleic acids or proteins, DEPC, alkylating agents, acylating agents, halogenating agents, nucleotides, nucleotide-analogous compounds, amino acids, amino acid-analogous compounds, viscosity regulators, dyes, buffer compounds, preservatives, complexing agents, reducing agents, oxidating agents, substances, which increase permeability of cells, chaotropic substances, such as for example guanidinium isothiocyanate or guanidinium hydrochloride or chaotropic salts with anions, as well as mixtures of at least two to six of these additives.

## Revendications

1. Procédé pour fixer et/ou stabiliser un échantillon par le fait de mettre l'échantillon dans un réceptacle à circulation (1, 2, 3), dans lequel le réceptacle à circulation (1, 2, 3) a une ouverture à angles vifs, l'ouverture à angles vifs est poussée dans l'échantillon, suivi de séparation de l'échantillon résiduel de la portion de l'échantillon qui est mise dans le réceptacle à circulation (1, 2, 3), et le réceptacle ainsi rempli de l'échantillon est immergé dans des agents pour fixer et/ou stabiliser et l'échantillon est fixé et/ou stabilisé **caractérisé par le fait que** le réceptacle a une face avant (1) relativement vaste du type tamis et a une face arrière et que la distance entre la face (1) et l'arrière est relativement faible.

2. Procédé selon la revendication 1, dans lequel la hauteur conventionnelle du réceptacle à circulation est 10 mm au maximum, préférablement 5 mm au maximum.

3. Procédé selon la revendication précédente, dans lequel les parois (1) du réceptacle, qui sont espacés l'un de l'autre pas plus de 10 mm, préférablement pas plus de 5 mm, sont de type tamis, de type grille ou sont agencées avec des fentes.

4. Procédé selon l'une des revendications précédentes, dans lequel comme agent pour fixer et/ou stabiliser un échantillon une composition contenant de polyol est utilisée.

5. Procédé selon l'une des revendications précédentes, dans lequel comme agent pour fixer/ou stabiliser un échantillon une composition est utilisée comprenant 1 jusqu'à 100 % en poids d'au moins d'un polyol et 0 à 99 % en poids d'au moins un additif, dans lequel la quantité totale de composants mentionnés ci-dessus est 100 % en poids.

6. Procédé selon l'une des deux revendications précédentes, dans lequel le polyol est un diol, triol, tétraol, pentaol, hexaol, heptaol, octaol, ou nonaol.

7. Procédé selon l'une des trois revendications précédentes, dans lequel le polyol a 2 à 20 atomes de carbone.

8. Procédé selon l'une des quatre revendications précédentes, dans lequel le polyol est sélectionné parmi le groupe comprenant le 1,2-ethanediol, le 1,2-propanediol, le 1,3-propanediol, le 1,2-butanediol, le 1,3-butanediol, le 1,4-butanediol, le 2,3-butanediol, le 1,2-pentanediol, le 1,3-pentanediol, le 1,4-pentanediol, le 1,5-pentanediol, le 2,3-pentanediol, le 2,4-pentanediol, le 1,2-hexanediol, le 1,3-hexanediol, le 1,4-hexanediol, le 1,5-hexanediol, le 1,6-hexanediol, le 2,3-hexanediol, le 2,4-hexanediol, le 2,5-hexanediol, le 3,4-hexanediol, le 1,2,3-propanetriol, le 1,2,3-butanetriol, le 1,2,4-butanetriol, le 1,2,3-pentanetriol, le 1,2,4-pentanetriol, le 1,2,5-pentanetriol, le 2,3,4-pentanetriol, le 1,2,3-hexanetriol, le 1,2,4-hexanetriol, le 1,2,5-hexanetriol, le 1,2,6-hexanetriol, le 2,3,4-hexanetriol, le 2,3,5-hexanetriol, le 3-méthyle-1,3,5-pentanetriol, le triméthylolpropanol, le pentaérythritol, le diéthylène glycol, le dipropylène glycol, le triethylène glycol, le tripropylène glycol, le polyéthylène glycol, et le polypropylène glycol.

9. Procédé selon l'une des revendications précédentes, dans lequel comme agent pour fixer et/ou stabiliser un échantillon un mélange d'au moins deux polyols est utilisé.

10. Procédé selon l'une des revendications précédentes, dans lequel l'agent pour fixer et/ou stabiliser un échantillon comprend un additif qui est sélectionné parmi le groupe comprenant les détergents, les inhibiteurs, qui inhibent la dégradation d'acides nucléiques ou de protéines, les régleurs de la viscosité, les matière colorants, les composés tampon, les conservateurs, les agents complexeurs, les agents réducteurs, les substances, qui augmentent la perméabilité de cellules, les substances chaotropiques, les fixateurs, d'autres solvants différents de polyols et/ou les mélanges d'au moins deux de ces additifs.

11. Procédé selon l'une des revendications précédentes, dans lequel l'échantillon est fixé or stabilisé par le fait de
i) le contacter avec une première composition (A) non-aqueuse comprenant :
(a1) 10 à 90 % en volume de méthanol et
(a2) au moins un additif additionnel et
(a3) éventuellement un acide,
ii) transformer le matériau biologique en une seconde composition (B) comprenant jusqu'à 99 % en volume d'éthanol.

12. Procédé selon la revendication précédente, dans lequel la composition non-aqueuse comprend :
(a1) 10 à moins de 80 % en volume de méthanol et
(a2) au moins un additif additionnel et
(a3) un acide.

13. Procédé selon la revendication précédente, dans lequel le composant méthanol (a1) est contenu dans une quantité de 10 jusqu'à moins de 70 % en volume, préférablement 60 % en volume ou 50 % en volume.

14. Procédé selon l'une des quatre revendications précédentes, dans lequel l'additif (a2) de la première composition de l'étape (i) est un solvant additionnel qui est différent de méthanol, ou est un additif qui est sélectionné parmi le groupe comprenant les détergents et les inhibiteurs, qui inhibent la dégradation d'acides nucléiques ou de protéines, le DEPC, les agents d'alkylation, les agents d'halogénation, les nucléotides, les composés analogues des nucléotides, les composés tampon, les préservatives, les agents complexeurs, les agents réducteurs, les agents oxydants, les substances, qui augmentent la perméabilité de cellules, les substances chaotropiques, tel que par exemple l'isothiocyanate de guanidinium ou le chlorhydrate de guanidinium ou les sels chaotropiques avec des anions, ainsi que les mélanges d'au moins deux à six desdits additifs.
